# FASCICULE DE BREVET EUROPEEN

(11) **EP 3 034 574 B1**
(45) Date de publication et mention de la délivrance du brevet: **30.08.2017**
(21) Numéro de dépôt: 15198486.1
(22) Date de dépôt: 08.12.2015
(51) Int. Cl.: C09J 11/04, C09J 123/02, C08L 83/00

(54) **COMPOSITION ADHÉSIVE DE FIXATION À BASE AQUEUSE PRÉSENTANT UNE TENUE AU FLUAGE AMÉLIORÉE**
KLEBEZUSAMMENSETZUNG ZUR BEFESTIGUNG AUF WASSERBASIS, DIE EINE VERBESSERTE KRIECHFESTIGKEIT AUFWEIST
WATER-BASED ADHESIVE ATTACHMENT COMPOSITION WITH IMPROVED CREEP RESISTANCE

(30) Priorité: 17.12.2014 FR 1462641
(43) Date de publication de la demande: 22.06.2016
(73) Titulaire: BOSTIK SA, 93210 La Plaine Saint Denis (FR)
(72) Inventeur: CAGAN, Virginie, 77140 MONTCOURT-FROMONVILLE (FR)
(74) Mandataire: Chahine, Audrey Claire

(56) Documents cités:
- DE-A1-102007 011 511
- TORRO-PALAU A ET AL: "COMPARISON OF THE PROPERTIES OF POLYURETHANE ADHESIVES CONTAINING FUMED SILICA OR SEPIOLITE AS FILLER", JOURNAL OF ADHESION, NEW YORK, NY, US, vol. 61, 1 janvier 1997 (1997-01-01), pages 195-211, XP009071431,

## Description

La présente invention concerne une composition adhésive comprenant au moins une dispersion aqueuse de copolymère de type styrène - (méth)acrylique/(méth)acrylate, au moins une charge, et un système épaississant particulier, ainsi que l'utilisation d'une telle composition comme colle de fixation.

Les colles (également appelées adhésifs ou encore mastics) de fixation sont couramment utilisées par les particuliers dans leurs travaux de bricolage pour fixer des objets sur divers supports tels que les sols, murs ou plafonds et éviter ainsi le recours aux systèmes mécaniques de fixation traditionnels à base par exemple de clous, vis et/ou chevilles.

Comme exemples d'objets pouvant être fixés, on peut citer les plinthes, les lambris, les tasseaux, les spots pour éclairage, les crochets, les miroirs, les patères ou porte-manteaux de formes diverses, les supports pour tringle à rideau et même les supports pour étagères destinées au rangement de vaisselle, ustensiles de cuisine ou livres.

Pour ces applications comme colles de fixation, il est très important de disposer d'une composition adhésive qui assure, dès la mise en contact de l'objet et du support à assembler après encollage, leur maintien immédiat grâce à un temps de prise très court, évitant leur maintien à la main ou encore la pose d'un serre-joint ou d'étais.

Par ailleurs, lorsque l'on souhaite fixer sur un support tel qu'une paroi verticale (mur) ou horizontale (plafond), un objet de poids conséquent ou soumis à une charge importante, la composition adhésive ainsi mise en oeuvre doit de plus assurer une cohésion satisfaisante du joint adhésif, afin de garantir la solidité de l'assemblage obtenu.

En particulier, il est primordial que le joint d'adhésif présente une bonne tenue au fluage dans le temps si l'on veut éviter que l'objet ne se décolle sous l'effet des contraintes exercées (cisaillement ou arrachement).

Parmi les différentes colles de fixation existant sur le marché, les colles aqueuses représentent une solution intéressante sur le plan économique, environnemental et toxicologique. En particulier, les colles de fixation à base aqueuse sont plus respectueuses de l'homme et de l'environnement par rapport à des colles de fixation à base solvantée qui comprennent à la place de l'eau une quantité importante de solvant organique. En général, les colles à base aqueuse peuvent être mise en oeuvre sans protection particulière, sans que ce l'opérateur soit incommodé par des émissions de solvant organique.

Par rapport aux autres types de colles de fixation réactives ou thermofusibles, les colles de fixation à base aqueuse sont également plus simples à utiliser. En effet, elles ne requièrent pas de conditions ou précautions particulières à prendre pour leur mise en oeuvre ou leur stockage. En particulier, les colles de fixation à base aqueuse sont prête-à-l'emploi. Elles sont applicables sans avoir à être chauffées au préalable.

Malgré les avantages sus-cités, le maintien initial des colles à base aqueuse reste limité notamment lorsque l'on souhaite fixer sur un support des objets lourds ou destinés à recevoir des charges lourdes. Un grand nombre de colles de fixation à base aqueuse ne convient pas en effet à la fixation de ces objets lourds sur des supports sensiblement verticaux.

Il a été tenté d'améliorer auparavant cette propriété en utilisant des teneurs élevées d'épaississant acrylate dans la composition adhésive, mais cela a conduit à des compositions difficiles à appliquer, instables au stockage et présentant de mauvaise propriété de mouillage par rapport aux matériaux à assembler.

Pour résoudre ces problèmes, il a été proposé dans la demande de brevet US 2003/0144405 d'utiliser une composition adhésive obtenue essentiellement à partir d'une dispersion aqueuse de copolymère de type styrène-acrylate, d'un système épaississant à base de silice hautement dispersée et d'une émulsion inverse d'une solution aqueuse de copolymère d'acide acrylique et d'acrylamide, mélangés dans des proportions particulières.

Toutefois, la composition adhésive obtenue reste encore à améliorer, notamment en terme de maintien initial.

Ainsi, il existe un besoin de mettre à disposition une composition adhésive permettant d'obtenir des performances adhésives améliorées, notamment en terme de maintien initial, par rapport aux solutions de fixation aqueuses existantes.

Il existe en outre un besoin de mettre à disposition une composition adhésive présentant une bonne tenue au fluage, permettant ainsi de fixer durablement un objet sur un support sensiblement vertical.

En particulier, il existe un besoin de mettre à disposition une composition adhésive pouvant remédier en tout ou partie aux inconvénients sus-cités, tout en conservant des avantages comparables aux solutions de fixation aqueuses connues, notamment en terme d'impact environnemental et sanitaire, de simplicité d'emploi et d'absence de contraintes au stockage.

De manière surprenante, il a été découvert que l'utilisation d'une composition adhésive selon l'invention, telle que décrite plus bas, permettait de répondre en tout ou partie aux besoins sus-cités, et notamment d'obtenir un meilleur maintien initial par rapport aux compositions aqueuses divulguées dans la demande de brevet US2003/014405.

En particulier, il a été observé que la composition adhésive selon l'invention est en outre facile à extruder de 5 à 35°C, notamment à température ambiante (15-25°C) à l'aide d'un dispositif d'extrusion manuel conventionnel utilisé dans le domaine des mastics (pistolet manuel ou pistolet squelette à cartouche). Un tel dispositif possède généralement une buse d'extrusion ayant un diamètre de sortie allant de 3 à 6 mm, tel qu'illustré dans les exemples.

En outre, il a été observé que la composition adhésive selon l'invention présente une tenue au fluage sous charge satisfaisante permettant d'obtenir une fixation durable. En particulier, il a été observé qu'un objet fixé avec une composition adhésive selon l'invention et stocké dans des conditions de température et d'humidité tels que décrits dans les exemples ne se décolle pas sous l'effet de son poids au bout d'une semaine et même au bout de plusieurs années après la mise en contact de l'objet encollé avec le support.

La présente invention a donc pour objet en premier lieu une composition adhésive comprenant :
a) de 50 à 75% en poids par rapport au poids de la composition adhésive, d'une dispersion dans l'eau d'au moins un polymère obtenu à partir :
   (a1) d'un monomère styrène, et
   (a2) d'au moins un comonomère choisi parmi les acides (méth)acryliques, les sels basiques de ces acides, les (méth)acrylates d'alkyle dont la partie alkyle, saturée ou insaturée, linéaire ou ramifiée, cyclique ou acyclique, comprend de 1 à 30 atomes de carbone, de préférence de 1 à 12 atomes de carbone, et plus préférentiellement de 1 à 8 atomes de carbone, ladite partie alkyle pouvant être interrompue par un ou plusieurs atomes d'oxygène, être époxydée et/ou être terminée par une fonction hydroxyle, et éventuellement
   (a3) d'un comonomère silanisé choisi parmi les vinyl silanes et les esters d'acide (méth)acryliques silanisés,
   la teneur en matière sèche dans la dispersion aqueuse a) allant de 30 à 80% en poids par rapport au poids de ladite dispersion aqueuse a),
b) de 2,5 à 6% en poids par rapport au poids de la composition adhésive, d'au moins une sépiolite,
c) de 0,5 à 3% en poids par rapport au poids de la composition adhésive, d'une composition choisie parmi :
   c1) une composition aqueuse comprenant au moins un polymère obtenu à partir :
      (c1.1) d'au moins un monomère choisi parmi les acides (méth)acryliques, l'acide 2-acrylamido-2-méthyl propane sulphonique, le 2-sulphoéthyl méthacrylate, l'acide styrène phosphonique, et les sels basiques de ces acides, et
      (c1.2) d'au moins un comonomère choisi parmi les (méth)acrylamides et la vinyl pyrrolidone,
      la teneur en matière sèche dans la composition aqueuse c1) allant de 10 à 40% en poids en poids par rapport au poids de ladite composition aqueuse c1), et
   c2) une composition aqueuse comprenant :
      (c2.1) au moins un polymère obtenu à partir :
         (c2.1.1) d'au moins un monomère choisi parmi les esters d'acide (méth)acrylique et les esters d'acide maléique, lesdits esters comprenant au moins un groupe hydrocarboné saturé ou insaturé, linéaire ou ramifié, cyclique ou acyclique, comportant de 8 à 30 atomes de carbone, de préférence de 8 à 22 atomes de carbone, et pouvant en outre être ou non oxyalkylé par un ou plusieurs groupes oxyalkylène en C₁-C₄, et
         (c2.1.2) d'au moins un comonomère choisi parmi les acides (méth)acryliques, et les esters d'acide (méth)acrylique ne comprenant pas de groupe hydrocarboné saturé ou insaturé, linéaire ou ramifié, cyclique ou acyclique, comportant de 8 à 30 atomes de carbones, ou
         (c2.2) au moins un polyuréthane comprenant au moins un groupe hydrocarboné saturé ou insaturé, linéaire ou ramifié, cyclique ou acyclique, comportant de 8 à 30 atomes de carbone, et pouvant en outre être ou non oxyalkylés par un ou plusieurs groupes oxyalkylène en C₁-C₄,
   la teneur en matière sèche dans la composition aqueuse c2) allant de 20 à 40% en poids par rapport au poids de ladite composition aqueuse c2), et
d) de 20 à 40% en poids d'au moins une charge.

D'autres objets, caractéristiques et avantages de la présente invention apparaitront plus clairement à la lecture de la description et des exemples.

Dans la présente demande, en l'absence d'indication contraire :
- Par polymère de « type styrène-(méth)acrylique/(méth)acrylate », on entend un polymère obtenu à partir des (co)monomères (a1), (a2) et (a3) tels que définis précédemment.
- Par « (méth)acrylates d'alkyle », on entend un acrylate d'alkyle et/ou un méthacrylate d'alkyle.
- Par « acides (méth)acryliques », on désigne un acide acrylique et/ou un acide méthacrylique. En particulier, par « esters d'acide (méth)acrylique », on désigne un ester d'acide acrylique et/ou un ester d'acide méthacrylique.
- Par « (méth)acrylamides », on désigne un acrylamide et/ou un méthacrylamide.
- Les sels basiques des (co)monomères acides des polymères utilisés dans la composition adhésive selon l'invention (tels que cités aux points a2) et c1.1)) peuvent être des sels organiques ou inorganiques. En particulier, ils peuvent être des sels aminés ou des sels de métaux alcalins, tels que des sels d'ammonium, de sodium ou de potassium.
- Par « choisi parmi », on entend que les produits listés après cette expression peuvent être utilisés seuls ou en mélange avec d'autres produits de ladite liste.

### Dispersion aqueuse a) :

Le polymère compris dans la dispersion aqueuse a) est de préférence présent sous forme anionique dans ladite dispersion aqueuse a).

Le pH de la dispersion aqueuse a) va de préférence de 7 à 9, et plus préférentiellement de 7,5 à 8,5.

En particulier, le polymère compris dans la dispersion aqueuse a) possède une température de transition vitreuse (Tg) inférieure ou égale à 65°C.

Le polymère compris dans la dispersion aqueuse a) utilisée dans la composition adhésive selon l'invention présente de préférence une teneur en monomère styrène d'au moins 30% en poids, plus préférentiellement d'au moins 50% en poids, par rapport au poids dudit polymère.

Le polymère compris dans la dispersion aqueuse a) est de préférence obtenu à partir de deux ou trois des (co)monomères décrits précédemment aux points (a1), (a2) et (a3).

Parmi les polymères utilisables dans la dispersion aqueuse a), on peut citer également ceux décrits au paragraphe (0042) de la demande de brevet US 2003/0144405.

De préférence, la dispersion aqueuse a) comprend une teneur en matière sèche allant de 40 à 65% en poids, et mieux encore de 45 à 55% en poids, par rapport au poids de ladite dispersion aqueuse a).

La dispersion aqueuse a) est préparée de manière bien connue par l'homme du métier. En particulier, elle peut être préparée à partir d'un polymère tel que décrit précédemment, sous forme de poudre, dispersée dans une composition comprenant de l'eau.

Le polymère compris dans la dispersion aqueuse a) peut-être synthétisé comme décrit dans la demande de brevet US 2003/014405, par exemple par polymérisation en masse ou en solution. Il peut également être obtenu directement sous forme de dispersion par polymérisation en milieu dispersé.

La dispersion aqueuse a) peut également être disponible dans le commerce.

Parmi les dispersions aqueuses a) disponibles sur le marché, on peut citer notamment les produits vendus sous la dénomination :
- Acronal® S813 par la société BASF, qui correspond à une dispersion aqueuse de copolymère de styrène et d'ester d'acide acrylique, ayant une Tg de 28°C environ, et dont la teneur en matière sèche va de 49 à 51 % en poids du poids de la dispersion aqueuse,
- Acronal® S533 par la société BASF, qui correspond à une dispersion aqueuse de copolymère de styrène et d'acide acrylique, ayant une Tg de 5°C environ, et dont la teneur en matière sèche va de 51 à 53% en poids du poids de la dispersion aqueuse,
- Axilat® DS 2120 par la société Momentive, qui correspond à une dispersion aqueuse de copolymère de styrène et d'ester d'acide acrylique, ayant une Tg de 22°C environ et une teneur pondérale en monomère styrène d'au moins 30% en poids par rapport au poids dudit copolymère, et dont la teneur en matière sèche est égale à 50% en poids environ du poids de la dispersion aqueuse, et
- Ucar Latex DL 345 par la société Union Carbide, qui correspond à une dispersion aqueuse de copolymère de styrène et d'ester acrylique, ayant une Tg de 25°C environ et une teneur pondérale en monomère styrène d'au moins 30% en poids par rapport au poids dudit copolymère, et dont la teneur en matière sèche de 50% en poids environ du poids de la dispersion aqueuse.

La composition adhésive selon l'invention comprend de préférence de 60 à 70% en poids par rapport au poids de la composition adhésive, d'une dispersion aqueuse a) telle que décrite précédemment.

### Sépiolite b) :

La sépiolite est un silicate de magnésium hydraté de la famille des phyllosilicates à structure fibreuse. Elle peut être représentée idéalement par la formule générale suivante :

Mg₄Si₆O₁₅(OH)₂.6H₂O

La sépiolite se présente sous forme de particules de forme aciculaire (fibre, aiguille, bâtonnet).

La sépiolite b) utilisable selon l'invention est une sépiolite hydrophile, telle qu'une sépiolite non modifiée par des groupes organiques.

La taille maximale des particules de sépiolite b) est de préférence inférieure à 10µm.

En particulier, au moins 95% en poids des particules de sépiolite b) font de préférence moins de 5µm.

La taille maximale et la granulométrie des particules de la sépiolite b) peuvent-être déterminées de manière bien connue de l'homme du métier par tamisage en voie humide.

Les particules de sépiolite b) peuvent présenter un diamètre inférieur ou égal à 30nm, de préférence allant de 15 à 25nm.

La surface spécifique BET des particules de sépiolite b) est de préférence supérieure ou égale à 150 m²/g. De manière plus préférée, la surface spécifique BET des particules de sépiolite b) va de 150 m²/g à 320 m²/g.

La surface spécifique BET est déterminée par adsorption d'azote, conformément à la norme ISO 9277:2010.

La sépiolite b) utilisable selon l'invention est disponible dans le commerce. On peut utiliser par exemple le produit vendu sous la dénomination Pangel® S9 par la société Tolsa.

La composition adhésive selon l'invention comprend de préférence de 2,9 à 6% en poids par rapport au poids de la composition adhésive, d'au moins une sépiolite telle que décrite précédemment.

### Composition aqueuse c1) :

De préférence, le polymère compris dans la composition aqueuse c1) est obtenu à partir :
(c1.1) d'au moins un monomère choisi parmi les acides (méth)acryliques et leurs sels basiques, et
(c1.2) d'au moins un comonomère choisi parmi les (méth)acrylamides.

Plus préférentiellement, le polymère compris dans la composition aqueuse c1) est obtenu à partir :
(c1.1) d'au moins un monomère choisi parmi l'acide acrylique et ses sels basiques, et
(c1.2) d'un comonomère acrylamide.

De préférence, la composition aqueuse c1) possède un pH allant de 7 à 10, et plus préférentiellement allant de 7,5 à 9.

Le polymère compris dans la composition aqueuse c1) utilisable selon l'invention est de préférence obtenu à partir de deux ou trois des (co)monomères décrits précédemment aux points (c1.1) et (c1.2).

Selon une variante préférée de l'invention, les groupes carboxyliques issus des monomères (c1.1) tels que listés précédemment, sont portés par le polymère de la composition aqueuse c1) sous leur forme de sels basiques.

La composition aqueuse c1) utilisable selon l'invention est de préférence une émulsion « eau-dans-huile » (E/H), également appelée « émulsion inverse », c'est-à-dire une émulsion d'une phase aqueuse dans une phase organique.

En particulier, le (ou les) polymère(s) présent(s) dans la composition aqueuse c1) tel(s) que décrit(s) précédemment est (ou sont) compris dans la phase aqueuse de l'émulsion inverse.

La phase organique de l'émulsion inverse comprend des hydrocarbures, linéaires ou ramifiés, cycliques ou acycliques, aliphatiques ou aromatiques, en C₁₀-C₂₀, de préférence en C₁₁-C₁₆, issus de coupes de distillation du pétrole.

La composition aqueuse c1) comprend de préférence une teneur en matière sèche allant de 25 à 35% en poids par rapport au poids de ladite composition aqueuse.

La composition aqueuse c1) est préparée de manière bien connue par l'homme du métier et peut être disponible commercialement.

Parmi les compositions aqueuses c1) utilisables et disponibles sur le marché, on utilise de préférence les produits de la série Texipol® commercialisés par la société Scott Bader. Ces produits correspondent à des émulsions inverses anioniques dans lesquelles la phase aqueuse comprend au moins un copolymère obtenu à partir d'acide acrylique, notamment sous forme de sel de sodium, et d'acrylamide, et la phase organique est une huile hydrocarbonée en C₁₁-C₁₆ de type isoalcane avec moins de 2% en poids d'hydrocarbure d'aromatique par rapport au poids de l'émulsion inverse.

### Composition aqueuse c2) :

De préférence, le polymère (c2.1) compris dans la composition aqueuse c2) est obtenu à partir :
(c2.1.1) d'au moins un monomère choisi parmi les (méth)acrylates d'alkyle et les mono- ou di-maléates d'alkyle, la partie alkyle linéaire ou ramifiée, cyclique ou acyclique de chacun de ces monomères comportant de 8 à 30 atomes de carbone, de préférence de 10 à 22 atomes de carbone, et pouvant en outre être ou non oxyalkylée par un ou plusieurs groupes oxyalkylène en C₁-C₄, et
(c2.1.2) d'au moins un comonomère choisi parmi les acides (méth)acryliques et les (méth)acrylates d'alkyle dont la partie linéaire ou ramifiée, cyclique ou acyclique, comporte de 1 à 4 atomes de carbone.

Plus préférentiellement, le polymère (c2.1) compris dans la composition aqueuse c2) est un polymère obtenu à partir :
(c2.1.1) - de 0,5 à 40% en poids, de préférence de 1 à 25% en poids, d'au moins un monomère choisi parmi les esters d'acide maléïque de formule (I) et les esters d'acide (méth)acrylique de formule (II) :

   R²OOC-CH=CH-COO(CH₂CH₂O)ₙR¹ (I)

   CH₂=C(R³)-COO(CH₂CH₂O)ₘR⁴ (II)

   formules (I) et (II) dans lesquelles:
   - R¹ et R⁴ représentent chacun un groupe alkyl, aryl ou alkylaryl, comportant de 8 à 30 atomes de carbone, et de préférence de 10 à 22 atomes de carbone,
   - R² représente un atome d'hydrogène ou un groupe monovalent -(CH₂CH₂O)ₙR⁵ dans lequel R⁵ représente un groupe alkyl, aryl ou alkylaryl, comportant de 8 à 30 atomes de carbone, et de préférence de 10 à 22 atomes de carbone,
   - R³ représente un atome d'hydrogène ou un groupe méthyl,
   - n et m sont des nombres allant de 2 à 150,
(c2.1.2) - de 20 à 50% en poids d'au moins un comonomère choisi parmi les acides (méth)acryliques, et
   - de 30 à 80% en poids d'au moins un comonomère choisi parmi les (méth)acrylates d'alkyle dont la partie alkyle linéaire ou ramifié, cyclique ou acyclique, est en C₁-C₄.

Le polymère (c2.1) compris dans la composition aqueuse c2) utilisable selon l'invention est de préférence obtenu à partir de deux ou trois des (co)monomères décrits précédemment aux points (c2.1.1) et (c2.1.2).

En particulier, les polymères (c2.1) et (c2.2) peuvent être des polymères multiséquencés tels que des copolymères bloc ou des terpolymères bloc.

Ils peuvent être également en greffon ou en étoile.

De préférence, le(s) groupe(s) oxyalkylène en C₁-C₄ pouvant être présent(s) dans les polymères (c2.1) et (c2.2) peu(ven)t être choisi(s) parmi l'oxyéthylène, l'oxypropylène, et leur mélange.

Avantageusement, les polymères (c2.1) et (c2.2) sont des polymères associatifs. En particulier, le polymère (c2.1) est un polymère associatif anionique et le polymère (c2.2) est un polymère associatif non ionique.

Par polymère « associatif », on entend un polymère amphiphile comportant des groupes hydrophiles, et des groupes hydrophobes qui, en milieu aqueux, auront tendance à s'assembler entre elles ou avec des parties hydrophobes d'autres molécules, telles que des tensioactifs, pour conduire à un épaississement du milieu.

Les groupes hydrophiles et les groupes hydrophobes peuvent être positionnés dans la chaine principale du polymère associatif ou en bout de chaine. Ils peuvent être en particulier distribués de manière séquencée dans la chaine principale du polymère.

Les groupes hydrophiles et les groupes hydrophobes peuvent également être pendants (ou greffés) à la chaine principale du polymère associatif, ou sur des groupes pendants (ou greffés) à la chaine principale dudit polymère.

Les groupes hydrophiles des polymères associatifs (c2.1) et (c2.2) sont choisis de préférence parmi des groupes carboxyliques sous forme acide (COOH), des groupes éthers (oxyalkylène) pouvant provenir des monomères (c2.1.1) et des groupes esters d'acide carboxylique provenant des monomères (c2.1.1), tels que décrits précédemment.

Les groupes hydrophobes des polymères associatifs (c2.1) et (c2.2) sont choisis de préférence parmi des groupes hydrocarbonés en C₈-C₃₀, et de préférence en C₁₀-C₂₂, tels que décrits précédemment.

De préférence, le polymère compris dans la composition aqueuse c2) est dispersé dans l'eau.

La composition aqueuse c2) comprend de préférence une teneur en matière sèche allant de 25 à 35% en poids par rapport au poids de ladite composition aqueuse c2).

La composition aqueuse c2) est préparée de manière bien connue par l'homme du métier et peut être disponible commercialement.

Parmi les compositions aqueuses c2) utilisables et disponibles sur le marché, on utilise de préférence les produits commercialisés sous les dénominations suivantes :
- Acrysol® TT-615 par la société Rohm & Haas, qui correspond à une dispersion aqueuse de polymère associatif anionique selon l'invention, à base d'acrylate comprenant des groupements hydrophobes, dont la teneur en matière sèche est égal à 30% en poids environ du poids de ladite dispersion aqueuse,
- Rheovis® PU 1190 et 1191 par la société BASF, qui correspondent chacun à une dispersion aqueuse de polyuréthane associatif non ionique selon l'invention, dont la teneur en matière sèche va de 30 à 34% en poids par rapport au poids de ladite dispersion aqueuse.

La composition adhésive selon l'invention peut comprendre de 0,5 à 2% en poids, et de préférence de 0,6 à 1,5% en poids d'une composition aqueuse c1) ou c2) telle que décrite précédemment, par rapport au poids de la composition adhésive.

De préférence, la composition adhésive selon l'invention comprend un mélange de compositions aqueuses c1) et c2) telles que décrites précédemment.

De préférence, le pH de la composition adhésive selon l'invention est supérieur ou égal à 7.

La composition adhésive selon l'invention comprend au moins une charge minérale ou organique.

De préférence, on utilise une charge minérale, et plus préférentiellement du carbonate de calcium.

Le carbonate de calcium peut être hydrophile ou hydrophobe, auquel cas le carbonate de calcium peut être traité en surface par un composé organique de manière à lui conférer un caractère hydrophobe.

Le carbonate de calcium peut être précipité ou micronisé. De préférence, on utilise du carbonate de calcium micronisé.

La teneur en charge pouvant être utilisée dans la composition adhésive selon l'invention va de préférence de 30 à 35 % en poids par rapport au poids de la composition adhésive.

La composition adhésive selon l'invention comprend de préférence au moins un plastifiant.

Le plastifiant est de préférence choisi parmi les composés hydroxylés liquides à température ambiante (15-25°C) et possédant de 4,0 à 5,0 milliéquivalents de fonction OH par gramme de plastifiant (méq/g).

A titre d'exemple de composés hydroxylés utilisables, on peut citer de manière non limitative les ester-alcools, les éthers-alcools, les alcools et leurs mélanges.

En particulier, on peut utiliser :
- les ester-alcools tels que le monoisobutyrate de 2,2,4-triméthyl-1,3-pentanediol, le monoisobutyrate de di(propylène glycol), le lactate d'alcool iso-C₈-C₁₀, l'hydroxysuccinate d'hexanol et les tartrates d'alcool iso-C₉-C₁₁,
- les éther-alcools tel que le monométhyl éther de tri(propylène glycol),
- les alcools tels que l'alcool iso-C₁₁-C₁₄.

De préférence, on utilise le produit commercialisé sous la dénomination Texanol® par la société Eastman Chemical comprenant au moins 98,5% en poids de 2,2,4-triméthyl-1,3-pentanediol monoisobutyrate (4,62 méq/g) par rapport au poids dudit produit commercial.

De préférence, la teneur totale en plastifiant utilisable dans la composition adhésive selon l'invention va de 0,5 à 1,5% en poids par rapport au poids de la composition adhésive.

La composition adhésive selon l'invention peut comprendre au moins un additif choisi parmi les pigments, les agents de conservation en pot, les anti-mousses, les antifongiques, les anti-bactériens, avec une teneur total en additif(s) pouvant aller de 0,2 à 1% en poids par rapport au poids de la composition adhésive.

La composition adhésive selon l'invention peut comprendre en outre au moins un agent dispersant pour améliorer la mouillabilité de la composition adhésive tel qu'un agent dispersant de charge et/ou de pigment. A titre d'exemple d'agent dispersant utilisable, on peut citer une composition aqueuse de polyacrylate de sodium ou d'ammonium (ayant un extrait sec de 30-50% en poids environ), dans une teneur allant de préférence de 0,1 à 0,8% en poids par rapport au poids de la composition adhésive. Les polyacrylates de sodium peuvent également être utilisés sous forme de poudre.

Ces agents dispersants sont disponibles dans le commerce. A titre d'exemple d'agent dispersant utilisable selon l'invention, on peut citer le produit commercial Ecodis® P90 vendu par la société Coatex, qui correspond à une composition aqueuse de polyacrylate d'ammonium à 40% en poids d'extrait sec par rapport au poids de ladite composition aqueuse.

La composition adhésive selon l'invention est préparée par simple mélange de ses ingrédients, tel que décrit dans la demande de brevet US 2003/014405.

La nature du support ou des objets à assembler peut être choisie parmi tout type de matériau habituellement utilisé dans le domaine de la construction, tel que le bois, la faïence, le verre, le ciment, le fibrociment, le plâtre, le placoplatre®, la brique, le métal, le plastique tel que le PVC.

La composition adhésive selon l'invention est facile à mettre en oeuvre à température ambiante (15-25°C). En particulier, la composition adhésive selon l'invention est facile à extruder à l'aide de cartouche ou pistolet manuel de mastic couramment utilisés par les particuliers, tel qu'illustré dans les exemples.

La composition adhésive selon l'invention peut être extrudée sous forme de plot(s) ou de cordon.

La présente invention concerne également l'utilisation de la composition adhésive telle que définie précédemment comme colle de fixation.

En particulier, la composition adhésive selon l'invention peut être utilisée pour fixer un élément (ou objet) sur un support tel qu'un plafond, un sol ou un support sensiblement vertical.

La composition adhésive convient en particulier pour fixer un élément de plus de 1,5 kg sur un support sensiblement vertical, tel qu'un mur.

Par « support sensiblement vertical », on entend un support dont le plan de la surface destiné à recevoir l'élément à fixer est sensiblement perpendiculaire au sol. Lorsque l'élément est plaqué contre un tel support puis lâché, cet élément ne tient pas et tombe au sol, en l'absence de fixation.

Par « support sensiblement vertical », on entend couvrir également les cas dans lesquels le plan de la surface du support est tel que lorsqu'on pose un élément sur le support puis qu'on le lâche, cet élément, sous l'effet de son poids, et en l'absence de fixation, glisse rapidement hors du support.

L'élément ainsi que le support, sur lequel ledit élément est destiné à être fixé, peuvent être constitués de différents matériaux. Ces matériaux peuvent être poreux ou non poreux. Ils peuvent être d'origine minérale, organique ou composite. On peut citer par exemple à titre de matériaux poreux utilisables des carreaux de plâtre, de la brique, des matériaux stratifiés à base de carton et de plâtre tel que commercialisé sous le nom de Placoplatre® par la société Saint Gobain, du béton, du ciment, du fibrociment, et du bois, et à titre de matériaux non poreux, la faïence, le métal, le PVC et les autres plastiques. La nature des matériaux de l'objet et du support est choisie en principe de façon à ce qu'au moins une des deux surfaces à assembler soit constituée d'un matériau poreux. Ce choix permet à l'eau contenue dans la colle de fixation d'être absorbée à la surface du matériau poreux et d'assurer la fixation de tout élément apposé sur ladite surface.

La composition adhésive selon l'invention peut être appliquée sur une seule des deux surfaces à joindre. On parle alors d'encollage simple (à la différence d'un encollage double où la composition est appliquée sur les deux surfaces à joindre).

Après encollage, l'élément enduit de colle est immédiatement mis en contact avec le support.

L'utilisation de la composition adhésive selon l'invention est donc simple, rapide et économique.

Les exemples suivants sont donnés à titre purement illustratif de l'invention et ne sauraient être interprétés pour en limiter la portée.

### Exemples :

Chacune des compositions adhésives des exemples 1 à 3 est préparée en mélangeant les ingrédients décrits dans le tableau 1 ci-dessous selon le procédé de préparation décrit dans la demande US2003/0144405. En particulier, la composition de l'exemple 3 correspond à la composition exemplifiée dans la demande de brevet US2003/0144405. La charge utilisée dans cet exemple est une silice hydrophile hautement dispersée vendue par la société Wacker sous la dénomination Silice HDK® T30, et l'agent dispersant utilisé dans cet exemple est une composition aqueuse de polyacrylate d'ammonium à 35% en poids d'extrait sec, vendue par la société BASF sous la dénomination Pigmentverteiler®.

Les teneurs des ingrédients indiqués dans le tableau 1 sont exprimés en grammes.

**Tableau 1**

| **Ingrédients** | **Ex.1 (invention)** | **Ex.2 (invention)** | **Ex.3 (comparatif)** |
|---|---|---|---|
| Axilat®DS2120 | 61,4 | 61,6 | 64,75 |
| Pangel® S9 | 4,9 | 4,9 | - |
| Silice HDK® T30 | - | - | 2,0 |
| Texipol® 63-202 | - | 1,1 | 2,0 |
| Acrysol® TT615 | 1,4 | - | - |
| CaCO₃ | 30,5 | 30,6 | 29,9 |
| Texanol® | 1,0 | 1,0 | - |
| Ecodis® P90 | 0,4 | 0,4 | - |
| Pigmentverteiler® | - | - | 1,0 |
| Eau, additifs | q.s.100 | q.s.100 | q.s.100 |

| | | | |
|---|---|---|---|
| q.s. : quantité suffisante pour atteindre un poids total de composition de 100 g | | | |

On réalise sur chacune des compositions adhésives préparées deux séries d'essais.

### Série d'essais No. 1 :

Pour chacune des compositions adhésives préparées, on évalue au moment de l'emploi, la facilité de mise en oeuvre de la composition et la résistance du collage sur bois en faisant varier tour à tour le poids de l'objet encollé, jusqu'à rupture du joint de collage.

Le protocole opératoire suivi pour chacune des compositions adhésives testées est décrit ci-après.

### Protocole opératoire :

Sur le recto d'une planchette en chêne de 155g environ, de 25 cm de long et 10 cm de large, on fixe plusieurs poids de manière à obtenir un objet (planchette+poids) de 1,5kg environ, représentant un collage de 60kg/m² approximativement. Les poids fixés sont répartis de manière homogène sur la surface de la planchette afin d'obtenir globalement un objet de poids homogène.

Après préparation de la composition adhésive, celle-ci est introduite dans une cartouche de mastic munie d'une buse d'extrusion ayant un diamètre de sortie de 5mm et extrudée manuellement à l'aide d'un pistolet squelette sur le verso de la planchette en chêne.

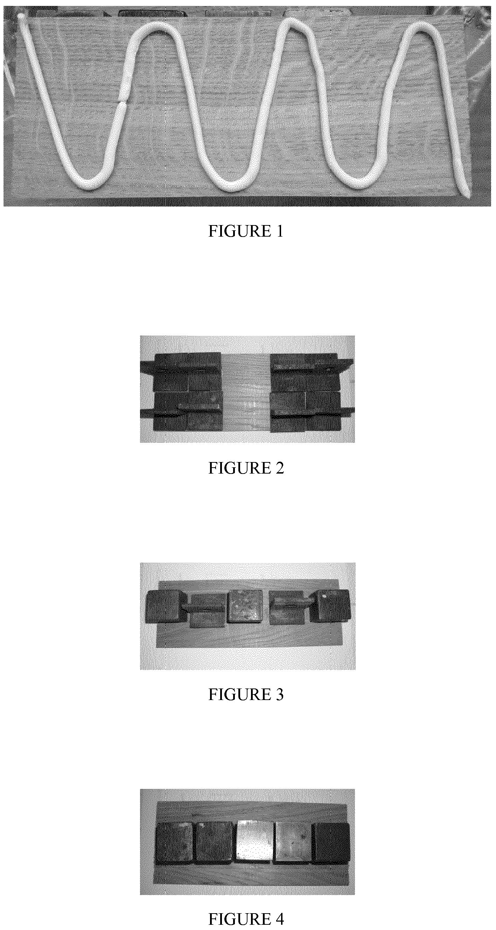

Pour chaque essai, la composition adhésive est appliquée sur la planchette en dessinant un même motif en zigzags tel qu'illustré par la figure 1.

La longueur du cordon de composition adhésive extrudée est égale à 0,7 mètre environ.

Immédiatement après la fin de l'application de la composition adhésive, on presse fortement la face enduite de la planchette contre une plaque de Placoplatre® d'environ 2,5 mètres de long et 1,20 mètres de large, fixée préalablement sur un mur à la verticale.

La position de la planchette est repérée de manière précise sur la plaque Placoplatre® afin d'estimer ultérieurement la tenue au fluage de la composition adhésive.

On laisse sécher l'assemblage pendant 24heures à 20°C et 60% d'humidité relative.

### Mesure de la tenue au fluage sous charge (à 24 heures):

Après les 24h de séchage dans les conditions mentionnées ci-dessus, on évalue la cohésion du joint d'adhésif.

Si la planchette de bois est restée collée sur son support en Placoplatre® sans fluer de plus d'1 mm vers le sol, on estime que le joint d'adhésif est suffisamment résistant pour supporter la charge surfacique appliquée de 60kg/m². On recommence alors l'essai en incrémentant de 20kg/m² la charge surfacique appliquée jusqu'à ce que le joint d'adhésif ne soit plus suffisamment résistant pour supporter ladite charge, c'est-à-dire jusqu'à ce qu'on observe :
- soit le décollement de la planchette qui tombe par terre,
- soit le fluage du joint d'adhésif. Ce fluage se traduit par le déplacement vertical de la planchette vers le sol de plus d'1mm par rapport à sa position initiale.

Les figures 2, 3 et 4 représentent la répartition des poids fixés à la surface de la planchette correspondant à une charge surfacique de 60kg/m², 80kg/m² et 100kg/m² respectivement.

La charge surfacique appliquée avant laquelle il est observé le décollement de la planchette, correspond à la charge surfacique maximale permettant d'obtenir le maintien de l'objet. La valeur de celle-ci est exprimée en kilogramme par mètre carré et est notée dans le tableau 2.

Les résultats montrent que les compositions des exemples 1 et 2 selon l'invention sont capables de fixer sur un mur un objet de poids plus lourd que la composition de l'exemple 3 selon l'art antérieur. Les compositions adhésives selon l'invention présentent donc un meilleur maintien initial par rapport à la composition de l'art antérieur.

### Evaluation de la facilité de mise en oeuvre de la composition adhésive:

L'extrudabilité de la composition adhésive est évaluée au moment de l'application de la composition par l'opérateur dans les conditions décrites précédemment.

Il a été constaté que les compositions des exemples 1 et 2 selon l'invention présentent les mêmes avantages en terme de facilité de mise en oeuvre, notamment par extrusion, par rapport à la composition de l'exemple 3 selon l'art antérieur.

### Série d'essais No2 : Résistance au cisaillement en traction

Sauf indication contraire dans la présente demande, la préparation des éprouvettes et les essais de résistance au cisaillement en traction ont été réalisés conformément à la norme NF EN 1465, en utilisant un dynamomètre Zwick Z020.

On réalise les éprouvettes utilisées pour les essais en découpant dans du hêtre naturel des languettes de 10 cm de long, 2,5 cm de large et 5 mm d'épaisseur.

On place dans chaque mâchoire du dynamomètre une éprouvette en hêtre dont l'extrémité libre a été préalablement enduite d'une composition adhésive sur une zone de recouvrement de 2,5 cm de long et 2,5 cm de large. Les éprouvettes sont assemblées en faisant coïncider et mettant en contact les zones encollées en les pressant l'une contre l'autre.

L'enduction de la composition adhésive a été réalisée à l'aide d'une spatule crantée normalisée de manière à obtenir après pressage, un joint d'adhésif continu de 0,2 mm d'épaisseur environ sur la zone de recouvrement.

On laisse sécher l'assemblage pendant 7 jours à 23°C et 50% d'humidité relative.

### Résistance au cisaillement en traction (à 7 jours):

Après 7 jours de séchage dans les conditions mentionnées ci-dessus, on évalue la résistance du joint adhésif en appliquant une traction verticale à une vitesse constante de 500 mètres par seconde.

On mesure en continue la force de cisaillement appliquée sur le joint d'adhésif jusqu'à rupture de l'assemblage. La valeur maximale relevée avant rupture correspond à la résistance au cisaillement à 7 jours de la composition adhésive. Les résultats sont exprimés en Newton par mètre carré et sont consignés dans le tableau 2 ci-dessous.

Les valeurs de résistance de cisaillement observées pour les compositions des exemples 1 et 2 selon l'invention sont supérieures à 20.10⁵ N/m² (valeur minimale acceptable), et même supérieures à 50.10⁵ N/m² montrant ainsi que le joint d'adhésif formé présente un bon maintien (dit final) même 7 jours après la mise en contact des surfaces encollées. Cette valeur à 7 jours met en évidence la valeur maximale de collage atteinte, tout en sachant que cette valeur est maintenue dans le temps sur plusieurs années.

**Tableau 2**

| **Caractéristiques** | **Ex.1 (invention)** | **Ex.2 (invention)** | **Ex.3 (comparatif)** |
|---|---|---|---|
| Charge maximale tolérée à 24h (en kg/m²) (chêne/Placoplatre®) | 100 | 100 | 60 |
| Résistance au cisaillement en traction à 7 jours (en N/m²) (hêtre/hêtre) | 58.10⁵ | 67.10⁵ | - |

## Revendications

1. Composition adhésive comprenant :
a) de 50 à 75% en poids par rapport au poids de la composition adhésive, d'une dispersion dans l'eau d'au moins un polymère obtenu à partir :
(a1) d'un monomère styrène, et
(a2) d'au moins un comonomère choisi parmi les acides (méth)acryliques, les sels basiques de ces acides, les (méth)acrylates d'alkyle dont la partie alkyle, saturée ou insaturée, linéaire ou ramifiée, cyclique ou acyclique, comprend de 1 à 30 atomes de carbone, ladite partie alkyle pouvant être interrompue par un ou plusieurs atomes d'oxygène, être époxydée et/ou être terminée par une fonction hydroxyle, et éventuellement
(a3) d'un comonomère silanisé choisi parmi les vinyl silanes et les esters d'acide (méth)acryliques silanisés,
la teneur en matière sèche dans la dispersion aqueuse a) allant de 30 à 80% en poids par rapport au poids de ladite dispersion aqueuse a),
b) de 2,5 à 6% en poids par rapport au poids de la composition adhésive, d'au moins une sépiolite,
c) de 0,5 à 3% en poids par rapport au poids de la composition adhésive, d'une composition choisie parmi :
c1) une composition aqueuse comprenant au moins un polymère obtenu à partir :
(c1.1) d'au moins un monomère choisi parmi les acides (méth)acryliques, l'acide 2-acrylamido-2-méthyl propane sulphonique, le 2-sulphoéthyl méthacrylate, l'acide styrène phosphonique, et les sels basiques de ces acides, et
(c1.2) d'au moins un comonomère choisi parmi les (méth)acrylamides et la vinyl pyrrolidone,
la teneur en matière sèche dans la composition aqueuse c1) allant de 10 à 40% en poids en poids par rapport au poids de ladite composition aqueuse c1), et
c2) une composition aqueuse comprenant :
(c2.1) au moins un polymère obtenu à partir :
(c2.1.1) d'au moins un monomère choisi parmi les esters d'acide (méth)acrylique et les esters d'acide maléique, lesdits esters comprenant au moins un groupe hydrocarboné saturé ou insaturé, linéaire ou ramifié, cyclique ou acyclique, comportant de 8 à 30 atomes de carbone, et pouvant en outre être ou non oxyalkylé par un ou plusieurs groupes oxyalkylène en C₁-C₄, et
(c2.1.2) d'au moins un comonomère choisi parmi les acides (méth)acryliques, et les esters d'acide (méth)acrylique ne comprenant pas de groupe hydrocarboné saturé ou insaturé, linéaire ou ramifié, cyclique ou acyclique, comportant de 8 à 30 atomes de carbone, ou
(c2.2) au moins un polyuréthane comprenant au moins un groupe hydrocarboné saturé ou insaturé, linéaire ou ramifié, cyclique ou acyclique, comportant de 8 à 30 atomes de carbone, et pouvant en outre être ou non oxyalkylé par un ou plusieurs groupes oxyalkylène en C₁-C₄,
la teneur en matière sèche dans la composition aqueuse c2) allant de 20 à 40% en poids par rapport au poids de ladite composition aqueuse c2), et
d) de 20 à 40% en poids d'au moins une charge.

2. Composition selon la revendication 1, **caractérisée en ce que** le polymère compris dans la dispersion aqueuse a) possède une température de transition vitreuse (Tg) inférieure ou égale à 65°C.

3. Composition selon la revendication 1 ou 2, **caractérisée en ce que** le polymère compris dans la composition aqueuse c1) est obtenu à partir :
(c1.1) d'au moins un monomère choisi parmi les acides (méth)acryliques et leurs sels basiques, et
(c1.2) d'au moins un comonomère choisi parmi les (méth)acrylamides.

4. Composition selon l'une quelconque des revendications 1 à 3, **caractérisée en ce que** la composition aqueuse c1) est une émulsion inverse.

5. Composition selon l'une quelconque des revendications 1 à 4, **caractérisée en ce que** le polymère (c2.1) compris dans la composition aqueuse c2) est obtenu à partir :
(c2.1.1) d'au moins un monomère choisi parmi les (méth)acrylates d'alkyle et les mono- ou di-maléate d'alkyle, la partie alkyle linéaire ou ramifiée, cyclique ou acyclique de chacun de ces monomères comportant de 8 à 30 atomes de carbone, et pouvant en outre être ou non oxyalkylée par un ou plusieurs groupes oxyalkylène en C₁-C₄, et
(c2.1.2) d'au moins un comonomère choisi parmi les acides (méth)acryliques et les (méth)acrylates d'alkyle dont la partie alkyle linéaire ou ramifié, cyclique ou acyclique, comporte de 1 à 4 atomes de carbone.

6. Composition selon l'une quelconque des revendications 1 à 5, **caractérisée en ce que** les polymères (c2.1) et (c2.2) sont des polymères associatifs.

7. Composition selon l'une quelconque des revendications 1 à 6, **caractérisée en ce qu'**elle présente un pH supérieur ou égal à 7.

8. Composition selon l'une quelconque des revendications 1 à 7, **caractérisée en ce que** la charge est du carbonate de calcium, ladite charge pouvant être hydrophile ou hydrophobe, précipitée ou micronisée.

9. Composition selon l'une quelconque des revendications 1 à 8, **caractérisée en ce qu'**elle comprend au moins un plastifiant choisi parmi les composés hydroxylés liquides à une température allant de 15 à 25°C, et possédant de 4,0 à 5,0 milliéquivalents de fonction OH par gramme de plastifiant.

10. Utilisation d'une composition adhésive telle que définie dans l'une quelconque des revendications 1 à 9 comme colle de fixation, notamment pour fixer un élément sur un plafond, un sol ou un support sensiblement vertical.

## Patentansprüche

1. Klebstoffzusammensetzung, umfassend:
a) 50 bis 75 Gew.-%, bezogen auf das Gewicht der Klebstoffzusammensetzung, einer Dispersion mindestens eines aus
(a1) einem Styrolmonomer und
(a2) mindestens einem Comonomer, das aus (Meth)acrylsäuren, Basensalzen dieser Säuren und Alkyl(meth)acrylaten, deren gesättigter oder ungesättigter, linearer oder verzweigter, cyclischer oder acyclischer Alkylteil 1 bis 30 Kohlenstoffatome umfasst und durch ein oder mehrere Sauerstoffatome unterbrochen, epoxidiert und/oder durch eine Hydroxylfunktion terminiert sein kann, ausgewählt ist, und gegebenenfalls
(a3) einem silanisierten Comonomer, das aus Vinylsilanen und silanisierten (Meth)acrylsäureestern ausgewählt ist,
erhaltenen Polymers in Wasser, wobei der Feststoffgehalt in der wässrigen Dispersion a) im Bereich von 30 bis 80 Gew.-%, bezogen auf das Gewicht der wässrigen Dispersion a), liegt,
b) 2,5 bis 6 Gew.-%, bezogen auf das Gewicht der Klebstoffzusammensetzung, mindestens eines Sepioliths,
c) 0,5 bis 3 Gew.-%, bezogen auf das Gewicht der Klebstoffzusammensetzung, einer Zusammensetzung, die aus:
c1) einer wässrigen Zusammensetzung, umfassend mindestens ein aus:
(c1.1) mindestens einem Monomer, das aus (Meth)acrylsäuren, 2-Acrylamido-2-methylpropan-sulfonsäure, 2-Sulfoethylmethacrylat, Styrolphosphonsäure und Basensalzen dieser Säuren ausgewählt ist, und
(c1.2) mindestens einem Comonomer, das aus (Meth)acrylamiden und Vinylpyrrolidon ausgewählt ist,
erhaltenes Polymer, wobei der Feststoffgehalt in der wässrigen Zusammensetzung c1) im Bereich von 10 bis 40 Gew.-%, bezogen auf das Gewicht der wässrigen Zusammensetzung c1), liegt, und
c2) einer wässrigen Zusammensetzung, umfassend:
(c2.1) mindestens ein aus:
(c2.1.1) mindestens einem Monomer, das aus (Meth)acrylsäureestern und Maleinsäureestern ausgewählt ist, wobei die Ester mindestens eine gesättigte oder ungesättigte, lineare oder verzweigte, cyclische oder acyclische Kohlenwasserstoffgruppe die 8 bis 30 Kohlenstoffatome umfasst und außerdem gegebenenfalls durch eine oder mehrere C₁-C₄-Oxyalkylengruppen oxyalkyliert sein kann, umfassen, und
(c2.1.2) mindestens einem Comonomer, das aus (Meth)acrylsäuren und (Meth)acrylsäureestern, die keine gesättigte oder ungesättigte, lineare oder verzweigte, cyclische oder acyclische Kohlenwasserstoffgruppe mit 8 bis 30 Kohlenstoffatomen umfassen, ausgewählt ist, erhaltenes Polymer oder
(c2.2) mindestens ein Polyurethan, das mindestens eine gesättigte oder ungesättigte, lineare oder verzweigte, cyclische oder acyclische Kohlenwasserstoffgruppe, die 8 bis 30 Kohlenstoffatome umfasst und außerdem gegebenenfalls durch eine oder mehrere C₁-C₄-Oxyalkylengruppen oxyalkyliert sein kann, umfasst,
wobei der Feststoffgehalt in der wässrigen Zusammensetzung c2) im Bereich von 20 bis 40 Gew.-%, bezogen auf das Gewicht der wässrigen Zusammensetzung c2), liegt, ausgewählt ist, und
d) 20 bis 40 Gew.-% mindestens eines Füllstoffs.

2. Zusammensetzung nach Anspruch 1, **dadurch gekennzeichnet, dass** das in der wässrigen Dispersion a) enthaltene Polymer eine Glasübergangstemperatur (Tg) kleiner gleich 65°C aufweist.

3. Zusammensetzung nach Anspruch 1 oder 2, **dadurch gekennzeichnet, dass** das in der wässrigen Zusammensetzung c1) enthaltene Polymer aus:
(c1.1) mindestens einem Monomer, das aus (Meth)acrylsäuren und Basensalzen davon ausgewählt ist, und
(c1.2) mindestens einem Comonomer, das aus (Meth)acrylamiden ausgewählt ist,
erhalten wird.

4. Zusammensetzung nach einem der Ansprüche 1 bis 3, **dadurch gekennzeichnet, dass** es sich bei der wässrigen Zusammensetzung c1) um eine inverse Emulsion handelt.

5. Zusammensetzung nach einem der Ansprüche 1 bis 4, **dadurch gekennzeichnet, dass** das in der wässrigen Zusammensetzung c2) enthaltene Polymer (c2.1) aus:
(c2.1.1) mindestens einem Monomer, das aus Alkyl(meth)acrylaten und Alkylmono- oder dimaleaten ausgewählt ist, wobei der lineare oder verzweigte, cyclische oder acyclische Alkylteil jedes dieser Monomere 8 bis 30 Kohlenstoffatome umfasst und außerdem gegebenenfalls durch eine oder mehrere C₁-C₄-Oxyalkylengruppen oxyalkyliert sein kann, und
(c2.1.2) mindestens einem Comonomer, das aus (Meth)acrylsäuren und Alkyl(meth)acrylaten, deren linearer oder verzweigter, cyclischer oder acyclischer Alkylteil 1 bis 4 Kohlenstoffatome umfasst, ausgewählt ist, erhalten wird.

6. Zusammensetzung nach einem der Ansprüche 1 bis 5, **dadurch gekennzeichnet, dass** es sich bei den Polymeren (c2.1) und (c2.2) um Assoziativpolymere handelt.

7. Zusammensetzung nach einem der Ansprüche 1 bis 6, **dadurch gekennzeichnet, dass** sie einen pH-Wert größer gleich 7 aufweist.

8. Zusammensetzung nach einem der Ansprüche 1 bis 7, **dadurch gekennzeichnet, dass** es sich bei dem Füllstoff um Calciumcarbonat handelt, wobei der Füllstoff hydrophil oder hydrophob, gefällt oder mikronisiert sein kann.

9. Zusammensetzung nach einem der Ansprüche 1 bis 8, **dadurch gekennzeichnet, dass** sie mindestens einen Weichmacher umfasst, der aus Hydroxylverbindungen, die bei einer Temperatur im Bereich von 15 bis 25°C flüssig sind und 4,0 bis 5,0 Milliäquivalenten OH-Funktion pro Gramm Weichmacher aufweisen, ausgewählt ist.

10. Verwendung einer Klebstoffzusammensetzung gemäß einem der Ansprüche 1 bis 9 als Fixierklebstoff, insbesondere zum Fixieren eines Elements an einer Wand, einem Boden oder einem weitgehend vertikalen Träger.

## Claims

1. Adhesive composition comprising:
a) from 50 to 75 wt%, relative to the weight of the adhesive composition, of a dispersion in water of at least one polymer obtained from:
(a1) a styrene monomer, and
(a2) at least one comonomer selected from (meth)acrylic acids, the basic salts of these acids, the alkyl (meth)acrylates whose alkyl moiety, saturated or unsaturated, linear or branched, cyclic or acyclic, comprises from 1 to 30 carbon atoms, and said alkyl moiety may be interrupted by one or more oxygen atoms, may be epoxidized and/or may be terminated with a hydroxyl function, and optionally
(a3) a silanized comonomer selected from vinyl silanes and silanized (meth)acrylic acid esters,
the content of dry matter in the aqueous dispersion a) being in the range from 30 to 80 wt% relative to the weight of said aqueous dispersion a),
b) from 2.5 to 6 wt%, relative to the weight of the adhesive composition, of at least one sepiolite,
c) from 0.5 to 3 wt%, relative to the weight of the adhesive composition, of a composition selected from:
c1) a water-based composition comprising at least one polymer obtained from:
(c1.1) at least one monomer selected from (meth)acrylic acids, 2-acrylamido-2-methyl propane sulphonic acid, 2-sulphoethyl methacrylate, styrene phosphonic acid, and the basic salts of these acids, and
(c1.2) at least one comonomer selected from (meth)acrylamides and vinyl pyrrolidone,
the content of dry matter in the water-based composition c1) being in the range from 10 to 40 wt% relative to the weight of said water-based composition c1), and
c2) a water-based composition comprising:
(c2.1) at least one polymer obtained from:
(c2.1.1) at least one monomer selected from (meth)acrylic acid esters and maleic acid esters, said esters comprising at least one hydrocarbon group, saturated or unsaturated, linear or branched, cyclic or acyclic, comprising from 8 to 30 carbon atoms, and which moreover may or may not be alkoxylated by one or more C₁-C₄ oxyalkylene groups, and
(c2.1.2) at least one comonomer selected from (meth)acrylic acids, and the (meth)acrylic acid esters not comprising a hydrocarbon group, saturated or unsaturated, linear or branched, cyclic or acyclic, comprising from 8 to 30 carbon atoms, or
(c2.2) at least one polyurethane comprising at least one hydrocarbon group, saturated or unsaturated, linear or branched, cyclic or acyclic, comprising from 8 to 30 carbon atoms, and which moreover may or may not be alkoxylated by one or more C₁-C₄ oxyalkylene groups,
the content of dry matter in the water-based composition c2) being in the range from 20 to 40 wt% relative to the weight of said water-based composition c2), and
d) from 20 to 40 wt% of at least one filler.

2. Composition according to Claim 1, **characterized in that** the polymer comprised in the aqueous dispersion a) has a glass transition temperature (Tg) less than or equal to 65°C.

3. Composition according to Claim 1 or 2, **characterized in that** the polymer comprised in the water-based composition c1) is obtained from:
(c1.1) at least one monomer selected from (meth)acrylic acids and basic salts thereof, and
(c1.2) at least one comonomer selected from (meth)acrylamides.

4. Composition according to any one of Claims 1 to 3, **characterized in that** the water-based composition c1) is an inverted emulsion.

5. Composition according to any one of Claims 1 to 4, **characterized in that** the polymer (c2.1) comprised in the water-based composition c2) is obtained from:
(c2.1.1) at least one monomer selected from alkyl (meth)acrylates and alkyl mono- or dimaleate, the alkyl moiety, linear or branched, cyclic or acyclic of each of these monomers comprising from 8 to 30 carbon atoms, and which moreover may or may not be alkoxylated by one or more C₁-C₄ oxyalkylene groups, and
(c2.1.2) at least one comonomer selected from (meth)acrylic acids and the alkyl (meth) acrylates whose linear or branched, cyclic or acyclic alkyl moiety comprises from 1 to 4 carbon atoms.

6. Composition according to any one of Claims 1 to 5, **characterized in that** the polymers (c2.1) and (c2.2) are associative polymers.

7. Composition according to any one of Claims 1 to 6, **characterized in that** it has a pH greater than or equal to 7.

8. Composition according to any one of Claims 1 to 7, **characterized in that** the filler is calcium carbonate, and said filler may be hydrophilic or hydrophobic, precipitated or micronized.

9. Composition according to any one of Claims 1 to 8, **characterized in that** it comprises at least one plasticizer selected from hydroxylated compounds that are liquid at a temperature in the range from 15 to 25°C, and possess from 4.0 to 5.0 milliequivalents of OH function per gram of plasticizer.

10. Use of an adhesive composition as defined in any one of Claims 1 to 9 as a fixing glue, notably for fixing an element on a ceiling, a floor or an approximately vertical substrate.
